# EUROPEAN PATENT SPECIFICATION

(11) **EP 3 464 664 B1**
(45) Date of publication and mention of the grant of the patent: **20.07.2022**
(21) Application number: 17728257.1
(22) Date of filing: 23.05.2017
(51) Int. Cl.: C21D 8/00, C21D 8/04, C25D 7/06, C21D 6/00, C22C 30/00, C21D 8/02, C22C 38/04, C22C 38/06, C22C 38/02, C23C 4/06, C22C 38/00, C23C 14/00, C23C 30/00

(54) **COLD ROLLED AND ANNEALED STEEL SHEET, METHOD OF PRODUCTION THEREOF AND USE OF SUCH STEEL TO PRODUCE VEHICLE PARTS**
KALTGEWALZTES UND ANGELASSENES STAHLBLECH, VERFAHREN ZU SEINER HERSTELLUNG UND VERWENDUNG EINES SOLCHEN STAHLS ZUR HERSTELLUNG VON FAHRZEUGTEILEN
FEUILLE D'ACIER LAMINEÈ À FROID ET REVENU, SON PROCÉDEÉ DE FABRICATION ET SON UTILISATION POUR PRODUIRE DES PIÈCES DE VÉHICULE

(30) Priority: 24.05.2016 WO PCT/IB2016/000696
(43) Date of publication of application: 10.04.2019
(73) Proprietor: Arcelormittal, 1160 Luxembourg (LU)
(72) Inventor: ZUAZO RODRIGUEZ, Ian Alberto, 71230 Saint Vallier (FR); DE DIEGO CALDERON, Irène, 57000 Metz (FR); GARAT, Xavier, Homecourt, 57310 (FR)
(74) Representative: Lavoix
(86) International application number: PCT/IB2017/000615
(87) International publication number: WO 2017/203345

(56) References cited:
- WO-A1-2015/099221
- CN-A- 103 820 735
- JP-A- 2005 120 399
- US-A1- 2013 081 740
- Wolfgang Bleck ET AL: "New Methods in Steel Design", Metec 2015, 19 June 2015 (2015-06-19), XP055340011, Retrieved from the Internet: URL:http://www.metec-estad2015.com/files/b leck_new_methods_in_steel_design.pdf [retrieved on 2017-01-27]

## Description

The present invention deals with a low density steel sheet presenting a microstructure mainly comprising austenite. The steel sheet according to the invention is particularly well suited for the manufacture of safety or structural parts for vehicles such as land motor vehicles.

Environmental restrictions are forcing automakers to continuously reduce the CO2 emissions of their vehicles. To do that, automakers have several options, whereby their principal options are to reduce the weight of the vehicles or to improve the efficiency of their engine systems. Advances are frequently achieved by a combination of the two approaches. This invention relates to the first option, namely the reduction of the weight of the motor vehicles. In this very specific field, there is a two-track alternative:
The first track consists of reducing the thicknesses of the steels while increasing their levels of mechanical strength. Unfortunately, this solution has its limits on account of a prohibitive decrease in the rigidity of certain automotive parts and the appearance of acoustical problems that create uncomfortable conditions for the passenger, not to mention the unavoidable loss of ductility associated with the increase in mechanical strength.

The second track consists of reducing the density of the steels by alloying them with other, lighter metals. Among these alloys, the low-density ones have attractive mechanical and physical properties while making it possible to significantly reduce the weight.

In particular, US 2003/0145911 discloses a Fe-Al-Mn-Si light steel having good formability and high strength. However, the ultimate tensile strength of such steels does not go beyond 800 MPa which does not allow taking full advantage of their low density for parts of all kinds of geometry.

<WO 2015/099221 discloses a steel sheet having high strength and low density characterized in that an Fe-Al-based intermetallic compound having an average particle diameter of 20 *µ*m or less is homogeneously dispersed in an austenite matrix, the volume fraction of the Fe-Al-based intermetallic compound is 1 to 50 %, and the volume fraction of κ-carbide ((Fe,Mn)3AlC) which is a perovskite carbide and has an L12 structure is 15 % or less.

The article "New Methods in Steel Design". W. Bleck, IEHK Steel Institute, RWTH Aachen University, discloses Fe-30Mn-8Al-1.2C alloy that can include kappa carbides formed during aging at 600° C lasting at least 15 minutes.

The purpose of the invention therefore is to provide a steel sheet presenting a density below 7.2, an ultimate tensile strength of at least 1300 MPa, a yield strength of at least 1200 MPa and a tensile elongation of at least 5%. In a preferred embodiment, the steel sheet according to the invention presents a density equal or below 7.1 or even equal or below 7.0, an ultimate tensile strength of at least 1400 MPa, a yield strength of at least 1300 MPa and a tensile elongation of at least 6%.

This object is achieved by providing a steel sheet according to claim 1. The steel sheet can also comprise characteristics of claims 2 to 5. Another object is achieved by providing the method according to claims 6 to 9. Another aspect is achieved by providing parts or vehicles according to claim 10.

Other characteristics and advantages of the invention will become apparent from the following detailed description of the invention.

Without willing to be bound by any theory it seems that the low density steel sheet according to the invention allows for an improvement of the mechanical properties thanks to this specific microstructure.

Regarding the chemical composition of the steel, carbon plays an important role in the formation of the microstructure and reaching of the targeted mechanical properties. Its main role is to stabilize austenite which is the main phase of the microstructure of the steel as well as to provide strengthening. Carbon content below 0.6% will decrease the proportion of austenite, which leads to the decrease of both ductility and strength of the alloy.

As a main constituent element of the intragranular kappa carbide (Fe,Mn)₃AlCₓ, carbon promotes the precipitation of such carbides. However, a carbon content above 1.3% can promote the precipitation of such carbides in a coarse manner on the grain boundaries, what results in the decrease of the ductility of the alloy.

Preferably, the carbon content is between 0.80 and 1.3%, more preferably between 0.8 and 1.0% by weight so as to obtain sufficient strength.

Manganese is an important alloying element in this system, mainly due to the fact that alloying with very high amounts of manganese and carbon stabilizes the austenite down to room temperature, which can then tolerate high amounts of aluminium without being destabilized and transformed to ferrite or martensite. Its amount is between 18 and 30% and even between 18 and 25%.

Aluminum addition to high manganese austenitic steels effectively decreases the density of the alloy. In addition, it considerably increases the stacking fault energy (SFE) of the austenite, leading in turn to a change in the strain hardening behavior of the alloy. Aluminium is also one of the primary elements of nanosized kappacarbide (Fe,Mn)₃AlCₓ and therefore its addition significantly enhances the formation of such carbides. The aluminium concentration of the present alloys should be adjusted, on one hand, to guarantee the austenite stability and the precipitation of kappa carbides, and on the other to control the formation of ferrite. Therefore, the aluminium content should be controlled to be between 7 and 12% and preferably between 8 and 10%.

Silicon is a common alloying element for high manganese and aluminium steels. It has a very strong effect on the formation of ordered ferrite D0₃. Besides, silicon was shown to enhance the activity of carbon in austenite and to increase the partitioning of carbon into the kappa carbides. In addition, silicon has been described as an effective alloying element that can be used to delay or prevent the precipitation of brittle β-Mn phase. However, it reduces the elongation and tends to form undesirable oxides during certain assembly processes, and it must therefore be kept below 2.0% and advantageously below 1.0

Sulfur and phosphorus are impurities that embrittle the grain boundaries. Their respective contents must not exceed 0.03 and 0.1% so as to maintain sufficient hot ductility.

Nitrogen content must be 0.1% or less so as to prevent the precipitation of AIN and the formation of volume defects (blisters) during solidification.

Nickel has a positive effect on penetration of hydrogen into the steel and, therefore it can be used as a diffusion barrier to hydrogen. Nickel can also be used as an effective alloying element because it promotes the formation of ordered compounds in ferrite, such as the B2 component, leading to additional strengthening. However, it is desirable, among others for cost reasons, to limit the nickel addition to a maximum content of 4.0% or less and preferably between 0.1 and 2.0%. In another embodiment, the nickel amount is below 0.1%.

Chromium may be used as optional element for increasing the strength of the steel by solution hardening. It also enhances the high temperature corrosion resistance of the steels according to the invention. However, since chromium reduces the stacking fault energy, its content must not exceed 3.0% and preferably between 0.1% and 2.0% or between 0.1 and 1.0%. In another embodiment, the chromium amount is below 0.1%.

Likewise, optionally, an addition of copper with a content not exceeding 3.0% is one means of hardening the steel by precipitation of copper-rich precipitates. However, above this content, copper is responsible for the appearance of surface defects in hot-rolled sheet. Preferably, the amount of copper is between 0.1 and 2.0%, or between 0.1 and 1.0%. In another embodiment, the chromium amount is below 0.1%.

Boron has a very low solid solubility and a strong tendency to segregate at the grain boundaries, interacting strongly with lattice imperfections. Therefore, boron can be used to limit the precipitation of intergranular kappa carbides. Preferably, the amount of boron is below 0.1%.

Niobium can simultaneously increase strength and toughness in the steel since it is an effective grain refiner. In addition, tantalum, zirconium, niobium, vanadium, titanium, molybdenum and tungsten are also elements that may optionally be used to achieve hardening and strengthening by precipitation of nitrides, carbo-nitrides or carbides. However, when their cumulated amount is above 2.0%, preferably above 1.0%, there is a risk that an excessive precipitation may cause a reduction in toughness, which has to be avoided.

The microstructure of the steel sheet according to the invention comprises at least 0.1% of kappa carbides, optionally up to 10% of granular ferrite, the remainder being made of austenite.

The austenitic matrix presents an average grain size below 6 µm and preferably below 4 µm, more preferably below 3 µm and has an average aspect ratio between 2 and 10, preferably between 2.0 and 6.0, or even between 2.0 and 4.0.

The kappa carbides (Fe,Mn)₃AlCₓ are present in the microstructure of the steel sheet according to the invention, with a minimum amount of 0.1% in area fraction, preferably of 0.5%, more preferably of 1.0% and advantageously of more than 3%. At least 80% of such kappa carbides have an average size below 30 nm, preferably below 20 nm, more preferably below 15 nm, advantageously below 10 nm or even below 5 nm. They precipitate inside the austenitic grains (so called intragranular kappa carbides). The homogenous and coherent precipitation of the nanosized -kappa carbide increases the strength of the alloy. The presence of intergranular kappa carbides is not admitted as such intergranular coarse kappa carbides may cause a decrease in the ductility of the steel.

Ferrite can also be present in the microstructure of the sheet according to the invention up to an amount of 10.0% in area fraction, preferably up to 5.0% or more preferably up to 3.0%. However, the ferrite morphology is limited to a granular geometry, excluding ferrite in form of bands, as they drastically degrade the ductility and formability of the steel. When present, the ferritic grains have an average grain size below 5 µm and preferably below 1 µm. The average aspect ratio of the ferrite, when present, is below 3.0 and preferably below 2.5. Such ferrite can be under the form of regular disordered ferrite α or ordered as a B2 structure with a (Fe,Mn)AI composition or as a D0₃ structure with a (Fe,Mn)₃Al composition is also possible, so that α, B2 and D0₃ structures can, in general, be observed in the steel according to the invention.

To protect the steel sheet according to the invention from corrosion, in a preferred embodiment, the steel sheet is covered by a metallic coating. The metallic coating can be an aluminum-based coating or a zinc-based coating.

Preferably, the aluminium-based coated comprises less than 15% Si, less than 5.0% Fe, optionally 0.1 to 8.0% Mg and optionally 0.1 to 30.0% Zn, the remainder being Al.

Advantageously, the zinc-based coating comprises 0.01-8.0% Al, optionally 0.2-8.0% Mg, the remainder being Zn.

The steel sheet according to claim 1 can be produced with the method of the invention as defined in claim 6.

The steel sheets according to the present invention are preferably produced through a method in which an semi product, such as slabs, thin slabs, or strip made of a steel according to the present invention having the composition described above, is cast, the cast input stock is heated to a temperature above 1000°C, preferably above 1050°C and more preferably above 1100°C or 1150°C or used directly at such a temperature after casting, without intermediate cooling.

The hot-rolling step is performed at a temperature above 800°C. To avoid any cracking problem through lack of ductility by the formation of ferrite in bands, the final rolling temperature is preferably above or equal to 850° C.

After the hot-rolling, the strip has to be coiled at a temperature below 600°C and preferably above 350°C. In a preferred embodiment, the coiling is performed between 350 and 450°C to avoid excessive kappa carbides precipitation.

The hot-rolled product obtained by the process described above is cold-rolled after a possible prior pickling operation has been performed in the usual manner.

The first cold-rolling step is performed with a reduction rate between 30 and 80%, preferably between 50 and 70%.

After this rolling step, a first annealing is performed by heating the sheet up to an annealing temperature comprised between 700 and 1000°C, holding it at such temperature during less than 5 minutes and cooling it at a rate of at least 30°C/s, more preferably of at least 50°C/s and even more preferably of at least 70°C/s. Preferably, this annealing is carried out continuously.

By controlling annealing temperature and time, either a fully austenitic or a two phase structure with the characteristics above can be obtained.

After this first annealing step, pre-straining of the materials was performed by means of a second cold rolling step with a reduction rate between 10 and 50%, preferably between 15% and 40%. The steel sheet may have increased strength through strain hardening by undergoing this second cold rolling step.

After this second rolling step, a second annealing is performed by heating the sheet up to an annealing temperature comprised between 400 and 700°C, holding it at such temperature between 2 and 10 hours and cooling it at a rate of at least 30°C/s, more preferably of at least 50°C/s and even more preferably of at least 70°C/s. Preferably, this annealing is carried out continuously. During this second annealing a compromise is obtained between ultra-high strength and formability via the intragranular kappa carbide precipitation and partial recovery of the material.

After those two annealing steps, the steel sheet may optionally be submitted to a metallic coating operation to improve its protection against corrosion. The coating process used can be any process adapted to the steel of the invention. Electrolytic or physical vapor deposition can be cited, with a particular emphasis on Jet Vapor Deposition. The metallic coating can be based on zinc or on aluminium, for example.

### Examples

Five grades, which compositions are gathered in table 1, were cast in slabs and processed following the process parameters gathered in table 2. Underlined values or results represent values outside the scope of the claims 1 and 6.

**Table 1 - Compositions**

| Grade | C | Mn | Al | Si | S | P | N |
|---|---|---|---|---|---|---|---|
| A | 0.887 | 24.90 | 8.70 | 0.217 | 0.004 | 0.025 | 0.0017 |
| B | 0.920 | 28.88 | 9.37 | 0.035 | 0.007 | 0.011 | 0.0009 |
| C | 0.955 | 19.90 | 5.72 | 0.050 | 0.005 | 0.007 | 0.0068 |
| D | 0.900 | 19.65 | 8.32 | 0.045 | 0.010 | 0.010 | 0.005 |
| E | 0.750 | 29.89 | 9.48 | 0.035 | 0.008 | 0.011 | 0.003 |

**Table 2 - Process parameters**

| Trial | Grade | Reheating T (°C) | Hot rolling finish T (°C) | Cooling rate (°C/s) | Coiling T (°C) | 1st cold rolling reduction (%) | |
|---|---|---|---|---|---|---|---|
| 1 | A | 1170 | 890 | 75 | 400 | 58 | |
| 2 | A | 1170 | 890 | 75 | 400 | 58 | |
| 3 | B | 1170 | 985 | 75 | 400 | 64 | |
| 4 | B | 1170 | 985 | 75 | 400 | 64 | |
| 5 | C | 1170 | 1000 | 75 | 400 | 58 | |
| 6 | C | 1170 | 1000 | 75 | 400 | 58 | |
| 7 | A | 1170 | 890 | 75 | 400 | 58 | |
| 8 | D | 1170 | 990 | 70 | 400 | 63 | |
| 9 | D | 1170 | 990 | 70 | 400 | 63 | |
| 10 | E | 1170 | 980 | 80 | 400 | 60 | |
| 11 | E | 1170 | 980 | 80 | 400 | 60 | |

| Trial | First annealing | | | 2^{nd} cold rolling reduction (%) | Second annealing | | |
|---|---|---|---|---|---|---|---|
| | T (°C) | Holding time (min) | Cooling rate (°C/s) | | T (°C) | Holding time (h) | Cooling rate (°C/s) |
| 1 | 850 | 3 | 80 | 30 | 550 | 3 | 80 |
| 2 | 850 | 3 | 80 | 30 | 550 | 6 | 80 |
| 3 | 875 | 3 | 80 | 20 | 550 | 3 | 80 |
| 4 | 875 | 3 | 80 | 20 | 550 | 6 | 80 |
| 5 | 830 | 3 | 80 | 20 | 500 | 3 | 80 |
| 6 | 830 | 3 | 80 | 20 | 500 | 6 | 80 |
| 7 | 850 | 3 | 80 | 30 | - | - | - |
| 8 | 850 | 10 | 355 | 20 | 450 | 10 | 0.3 |
| 9 | 850 | 3 | 355 | 10 | 450 | 3 | 355 |
| 10 | 975 | 3 | 55 | 20 | 450 | 3 | 355 |
| 11 | 850 | 3 | 355 | 20 | 400 | 170 | 355 |

The resulting samples were then analyzed and the corresponding microstructure elements and mechanical properties were respectively gathered in table 3 and 4.

**Table 3 - Microstructure**

| Trial | Austenite (%) | Ferrite (%) | Ferrite shape | Kappa carbides | Austenite grain size (µm) | Austenite aspect ratio | Ferrite grain size (µm) | Ferrite aspect ratio |
|---|---|---|---|---|---|---|---|---|
| 1 | 95 | 5 | granular | Yes | 1.6 | 3.3 | 0.47 | 1.95 |
| 2 | 95 | 5 | granular | Yes | 1.6 | 3.3 | 0.47 | 1.95 |
| 3 | 100 | 0 | - | Yes | <6 | <6 | - | - |
| 4 | 100 | 0 | - | Yes | <6 | <6 | - | - |
| 5 | 100 | 0 | - | No | <6 | <6 | - | - |
| 6 | 100 | 0 | - | No | <6 | <6 | - | - |
| 7 | 95 | 5 | granular | No | 1.6 | 3.3 | 0.47 | 1.95 |
| 8 | 88 | 12 | granular | Yes | 1.15 | 2.7 | 0.35 | 1.83 |
| 9 | 93 | 7 | granular | Yes | 1.70 | 2.2 | 0.45 | 1.95 |
| 10 | 97.4 | 2.6 | granular | Yes | 2.05 | 2.25 | 0.65 | 2.40 |
| 11 | 97.4 | 2.6 | granular | Yes | 2.00 | 2.3 | 0.65 | 2.25 |

No samples showed any presence of intergranular Kappa carbides nor of β-Mn phase, except samples 8 and 11. Kappa carbides amounts of trials 1 to 4 were above 0.1%, whereas they were under 0.1% for trials 5, 6 and 7. More than 80% of the Kappa carbides of trials 1 to 4 and 9 and 10 had an average grain size below 20 nm.

**Table 4 - Properties**

| Trial | Density | Tensile strength (MPa) | Yield Strength (MPa) | Tensile elongation (MPa) |
|---|---|---|---|---|
| 1 | 6.81 | 1598 | 1489 | 6.1 |
| 2 | 6.81 | 1609 | 1522 | 9.2 |
| 3 | 6.75 | 1442 | 1354 | 14.1 |
| 4 | 6.75 | 1485 | 1377 | 10.8 |
| 5 | 7.31 | 1239 | 1099 | 20.4 |
| 6 | 7.31 | 1248 | 1108 | 20.9 |
| 7 | 6.81 | 1508 | 1392 | 1.9 |
| 8 | 6.86 | 1695 | 1660 | 1.4 |
| 9 | 6.86 | 1349 | 1278 | 17.8 |
| 10 | 6.72 | 1329 | 1262 | 15.9 |
| 11 | 6.72 | 1300 | 1195 | 15.8 |

The examples show that the steel sheets according to the invention are the only one to show all the targeted properties thanks to their specific composition and microstructures.

## Claims

1. A cold rolled and annealed steel sheet comprising by weight:
0.6 < C < 1.3%,
18 ≤ Mn < 30%,
7 ≤ Al < 12%,
Si ≤ 2.0 %
S ≤ 0.015%,
P ≤ 0.1%,
N ≤ 0.1%,
possibly one or more optional elements chosen among Ni, Cr and Cu in an individual amount of up to 3% and possibly one or more elements chosen among B, Ta, Zr, Nb, V, Ti, Mo, and W in a cumulated amount of up to 2.0%, the remainder of the composition being iron and inevitable impurities resulting from the elaboration, the microstructure of said sheet comprising at least 0.1% of intragranular kappa carbides, wherein at least 80% of such kappa carbides have an average size below 30 nm, optionally up to 10% of granular ferrite, the remainder being made of austenite, the average grain size and average aspect ratio of the austenite being respectively below 6 µm and comprised between 2 and 10 and the average grain size and average aspect ratio of the ferrite, when present, being respectively below 5 µm and below 3.0, the density of said steel sheet being equal or below 7.2 and its tensile elongation being at least 5.0%, said steel sheet having an ultimate tensile strength of at least 1300 MPa and a yield strength of at least 1200 MPa, wherein the microstructure and the strength are measured according to the description.

2. A steel sheet according to claim 1, wherein the carbon content is comprised between 0.8 and 1.0%.

3. A steel sheet according to anyone of claims 1 or 2, wherein the aluminum content is comprised between 8.5 and 10%.

4. A steel sheet according to anyone of claims 1 to 3, wherein the steel sheet is covered by a metallic coating.

5. A steel sheet according to anyone of claims 1 to 4, wherein the steel sheet is covered by an aluminum-based coating or a zinc-based coating.

6. A method for producing a cold-rolled and annealed steel sheet according to claim 1, comprising the following steps :
- feeding a slab which composition is according to claims 1 to 3
- reheating such slab at a temperature above 1000°C and hot rolling it with a final rolling temperature of at least 800°C,
- coiling the hot rolled steel sheet at a temperature below 600 °C,
- first cold-rolling of such hot rolled steel sheet at a reduction comprised between 30 and 80%,
- first annealing of such cold rolled sheet by heating it up to an annealing temperature comprised between 700 and 1000°C, holding it at such temperature during less than 5 minutes and cooling it at a rate of at least 30°C/s,
- second cold-rolling of such annealed steel sheet at a reduction comprised between 10 and 50%,
- second annealing of such cold sheet by heating it up to an annealing temperature comprised between 400 and 700°C, holding it at such temperature between 2 and 10 hours and cooling it at a rate of at least 30°C/s.

7. A method according to claim 6, wherein the first annealing temperature is comprised between 800 and 950°C.

8. A method according to anyone of claims 6 or 7, wherein the coiling temperature is comprised between 350 and 500°C.

9. A method according to anyone of claims 6 to 8, comprising further a final coating step.

10. Use of a steel sheet according to anyone of claims 1 to 5 for manufacturing a structural or safety part of a vehicle.

## Patentansprüche

1. Kaltgewalztes und geglühtes Stahlblech, umfassend nach Gewicht:
0,6 < C < 1,3 %,
18 ≤ Mn < 30 %,
7 ≤ Al < 12 %,
S ≤ 2,0 %,
S ≤ 0,015 %,
P ≤ 0,1 %,
N ≤ 0,1 %,
möglicherweise ein oder mehrere optionale Elemente, ausgewählt aus Ni, Cr und Cu in einer individuellen Menge von bis zu 3 %, und optional ein oder mehrere Elemente, ausgewählt aus B, Ta, Zr, Nb, V, Ti, Mo und W in einer kumulierten Menge von bis zu 2,0 %, wobei der Rest der Zusammensetzung Eisen und unvermeidbare Verunreinigungen ist, die sich aus der Verarbeitung ergeben, das Mikrogefüge des Blechs umfassend mindestens 0,1 % intragranulare Kappa-Karbide, wobei mindestens 80 % solcher Kappa-Karbide eine mittlere Größe von weniger als 30 nm aufweisen, optional bis zu 10 % körnigen Ferrit, wobei der Rest aus Austenit ist, wobei die mittlere Korngröße und das mittlere Seitenverhältnis des Austenits unter 6 µm bzw. zwischen 2 und 10 sind und die mittlere Korngröße und das mittlere Seitenverhältnis des Ferrits, wenn vorhanden, unter 5 µm bzw. unter 3,0 sind, wobei die Dichte des Stahlblechs gleich wie oder unter 7,2 ist und seine Zugdehnung mindestens 5,0 % ist, wobei das Stahlblech eine Zugfestigkeit von mindestens 1300 MPa und eine Streckgrenze von mindestens 1200 MPa aufweist, wobei das Mikrogefüge und die Festigkeit gemäß der Beschreibung gemessen werden.

2. Stahlblech nach Anspruch 1, wobei der Kohlenstoffgehalt zwischen 0,8 und 1,0 % ist.

3. Stahlblech nach einem der Ansprüche 1 oder 2, wobei der Aluminiumgehalt zwischen 8,5 und 10 % liegt.

4. Stahlblech nach einem der Ansprüche 1 bis 3, wobei das Stahlblech durch eine metallische Beschichtung bedeckt ist.

5. Stahlblech nach einem der Ansprüche 1 bis 4, wobei das Stahlblech durch eine Beschichtung auf Aluminiumbasis oder eine Beschichtung auf Zinkbasis bedeckt ist.

6. Verfahren zum Herstellen eines kaltgewalzten und geglühten Stahlblechs nach Anspruch 1, umfassend die folgenden Schritte:
- Zuführen einer Bramme mit einer Zusammensetzung nach einem der Ansprüche 1 bis 3
- Wiedererwärmen einer solchen Bramme auf eine Temperatur von über 1000 °C und Warmwalzen mit einer Walzendtemperatur von mindestens 800 °C,
- Aufwickeln des warmgewalzten Stahlblechs bei einer Temperatur unter 600 °C,
- erstes Kaltwalzen eines solchen warmgewalzten Stahlblechs mit einer Reduktion zwischen 30 und 80 %,
- erstes Glühen eines solchen kaltgewalzten Blechs durch Erhitzen auf eine Glühtemperatur zwischen 700 und 1000 °C, Halten auf dieser Temperatur über weniger als 5 Minuten und Abkühlen mit einer Geschwindigkeit von mindestens 30 °C/Sek.,
- zweites Kaltwalzen eines solchen geglühten Stahlblechs mit einer Reduktion zwischen 10 und 50 %,
- Zweites Glühen eines solchen kalten Blechs durch Erhitzen auf eine Glühtemperatur zwischen 400 und 700 °C, Halten bei dieser Temperatur zwischen 2 und 10 Stunden und Abkühlen mit einer Geschwindigkeit von mindestens 30 °C/Sek.

7. Verfahren nach Anspruch 6, wobei die erste Glühtemperatur zwischen 800 und 950 °C liegt.

8. Verfahren nach einem der Ansprüche 6 bis 7, wobei die Aufwickeltemperatur zwischen 350 und 500 °C liegt.

9. Verfahren nach einem der Ansprüche 6 bis 8, ferner umfassend einen abschließenden Beschichtungsschritt.

10. Verwendung eines Stahlblechs nach einem der Ansprüche 1 bis 5 zum Herstellen eines Struktur- oder Sicherheitsteils eines Fahrzeugs.

## Revendications

1. Tôle d'acier laminée à froid et recuite comprenant en poids :
0,6 < C < 1,3 %,
18 ≤ Mn < 30 %,
7 ≤ Al < 12 %,
Si ≤ 2,0 %
S ≤ 0,015 %,
P ≤ 0,1 %,
N ≤ 0,1 %,
éventuellement un ou plusieurs éléments facultatifs choisis parmi Ni, Cr et Cu dans une quantité individuelle inférieure ou égale à 3 % et éventuellement un ou plusieurs éléments choisis parmi B, Ta, Zr, Nb, V, Ti, Mo et W dans une quantité cumulée inférieure ou égale à 2,0 %, le reste de la composition étant du fer et des impuretés inévitables résultant de l'élaboration, la microstructure de ladite tôle comprenant au moins 0,1 % de carbures kappa intragranulaires, dans laquelle au moins 80 % de ces carbures kappa ont une taille moyenne inférieure à 30 nm, éventuellement jusqu'à 10 % de ferrite granulaire, le reste étant constitué d'austénite, la taille moyenne des grains et le rapport d'aspect moyen de l'austénite étant respectivement inférieure à 6 µm et compris entre 2 et 10 et la taille moyenne des grains et le rapport d'aspect moyen de la ferrite, lorsqu'elle est présente, étant respectivement inférieure à 5 µm et inférieur à 3.0, la densité de ladite tôle d'acier étant inférieure ou égale à 7,2 et son allongement à la traction étant d'au moins 5,0 %, ladite tôle d'acier présentant une résistance à la traction ultime d'au moins 1 300 MPa et une limite d'élasticité d'au moins 1 200 MPa, dans laquelle la microstructure et la résistance sont mesurées conformément à la description.

2. Tôle d'acier selon la revendication 1, dans laquelle la teneur en carbone est comprise entre 0,8 et 1,0 %.

3. Tôle d'acier selon l'une quelconque des revendications 1 et 2, dans laquelle la teneur en aluminium est comprise entre 8,5 et 10 %.

4. Tôle d'acier selon l'une quelconque des revendications 1 à 3, la tôle d'acier étant recouverte d'un revêtement métallique.

5. Tôle d'acier selon l'une quelconque des revendications 1 à 4, la tôle d'acier étant recouverte d'un revêtement à base d'aluminium ou d'un revêtement à base de zinc.

6. Procédé de production d'une tôle d'acier laminée à froid et recuite selon la revendication 1, comprenant les étapes suivantes :
- l'alimentation d'une brame dont la composition est conforme aux revendications 1 à 3
- le réchauffement de cette brame à une température supérieure à 1 000°C et son laminage à chaud à une température de laminage finale supérieure ou égale à 800°C,
- l'enroulement de la tôle d'acier laminée à chaud à une température inférieure à 600°C,
- un premier laminage à froid de cette tôle d'acier laminée à chaud à un taux de réduction compris entre 30 et 80 %,
- un premier recuit de cette tôle laminée à froid en la chauffant jusqu'à une température de recuit comprise entre 700 et 1 000°C, en la maintenant à cette température pendant moins de 5 minutes et en la refroidissant à un taux d'au moins 30°C/s,
- un second laminage à froid de cette tôle d'acier recuite à un taux de réduction compris entre 10 et 50 %,
- un second recuit de cette tôle froide en la chauffant jusqu'à une température de recuit comprise entre environ 400 et 700°C, en la maintenant à cette température entre 2 et 10 heures et en la refroidissant à un taux d'au moins 30°C/s.

7. Procédé selon la revendication 6, dans lequel la première température de recuit est comprise entre 800 et 950°C.

8. Procédé selon l'une quelconque des revendications 6 et 7, dans lequel la température d'enroulement est comprise entre 350 et 500°C.

9. Procédé selon l'une quelconque des revendications 6 à 8, comprenant en outre une étape de revêtement finale.

10. Utilisation d'une tôle d'acier selon l'une quelconque des revendications 1 à 5 pour la fabrication d'une partie structurelle ou de sécurité d'un véhicule.
